# FASCICULE DE BREVET EUROPEEN

(11) **EP 0 682 345 B1**
(45) Date de publication et mention de la délivrance du brevet: **07.01.1998**
(21) Numéro de dépôt: 95401071.6
(22) Date de dépôt: 09.05.1995
(51) Int. Cl.: G21C 3/334, F16B 21/18, F16D 1/08

(54) **Dispositif de retenue démontable pour tube-guide d'assemblage combustible**
Zerlegbare Befestigungsvorrichtung für das Leitrohr eines Brennstabbündels
Dismountable retaining device for a guide tube of a fuel assembly

(30) Priorité: 10.05.1994 US 240353
(43) Date de publication de la demande: 15.11.1995
(73) Titulaire: B & W FUEL COMPANY, Lynchburg, VA 24506-0935 (US)
(72) Inventeur: Attix, Douglas Jeffrey, Lynchburg, VA 24502 (US)
(74) Mandataire: Armengaud Ainé, Alain

(56) Documents cités:
- EP-A- 0 098 774
- CH-A- 302 651
- GB-A- 731 887
- US-A- 2 657 082
- US-A- 3 769 158
- US-A- 4 136 982

## Description

### ARRIERE-PLAN DE L'INVENTION

### 1. Domaine de l'invention

L'invention se rapporte de façon générale à des assemblages combustibles nucléaires et plus particulièrement à un dispositif de verrouillage réutilisable, destiné à des tubes-guides et à des raccords d'extrémité.

### 2. Arrière-Plan général

Dans le coeur d'un réacteur nucléaire, chaque assemblage combustible est ajusté par rapport à un certain nombre de tubes-guides, utilisés pour recevoir des barres de contrôle. Dans l'industrie nucléaire, les tubes qui sont utilisés pour recevoir ces barres de contrôle sont appelés tubes-guides ou tubes chaussette, la structure inteme à laquelle ces tubes sont fixés étant dénommée raccord d'extrémité, ou distributeur de dessus si elle est disposée à l'extrémité supérieure du tube, suivant le Constructeur.

En conséquence, on doit considérer ici que les références à un tube-guide et à un raccord d'extrémité supérieure doivent être entendues comme se rapportant également à un tube chaussette et à un distributeur supérieur.

Les tubes-guides possèdent une épaisseur de paroi relativement mince et requièrent ainsi un manchon au niveau de leur extrémité, pour fournir le support nécessaire à des points de fixation et notamment à des butées à épaulement.

Pendant leur montage, les tubes-guides sont insérés dans des grilles d'espacement. Le raccord d'extrémité est ensuite aligné avec les manchons correspondant des tubes-guides, reçus dans et fixés à ceux-ci.

De façon typique, les raccords d'extrémité et les manchons sont fixés l'un à l'autre par l'utilisation de joints filetés et de coupelles de verrouillage.

Lorsqu'il devient nécessaire d'enlever un distributeur ou un raccord d'extrémité d'assemblage combustible irradié du réacteur, le travail doit être effectué à l'aide d'un équipement travaillant sous eau, commandé à distance. Ceci conduit à la manipulation d'un certain nombre de pièces et implique que les fixations puissent être vissées de travers durant leur installation.

La manipulation à distance de ces pièces sous eau augmente par ailleurs la possibilité d'en perdre certaines, ce qui peut endommager le réacteur et augmenter le temps de travail.

Parmi les brevets concemés par des dispositifs de retenue pour raccords d'extrémité d'assemblages combustibles nucléaires, le demandeur entend se référer plus particulièrement aux suivants :
- Le brevet U.S. N° 3 769 158 qui décrit l'utilisation d'un raccord d'extrémité au-dessus des crayons combustibles, où un rétrécissement s'étendant à travers l'ouverture de ce raccord, possède des bagues à fentes élastiques, situées dans des rainures et qui engagent ce raccord d'extrémité.
- Le brevet U.S. N°3 828 868 qui décrit des tubes-guides, fixés par vissage au raccord d'extrémité.
- Le brevet U.S. N°4 699 761 qui décrit l'utilisation d'un manchon fileté, prévu à l'extrémité supérieure du tube-guide.
- Le brevet européen EP N°0 098 774 qui décrit une liaison entre un tube-guide et un raccord d'extrémité, ce tube-guide comportant une extrémité fendue, contre laquelle est exercé un effort d'expansion d'une bague de blocage, un tel montage ne pouvant s'opposer à ce que les deux pièces ne soient desassemblées sous l'effet d'un effort axial, ces pièces étant réunies par un système de jonc flexible tel que décrit par exemple dans le US-A-4 136 982.

### RESUME DE L'INVENTION

L'invention satisfait le besoin mentionné ci-dessus, au moyen d'un dispositif de verrouillage réutilisable selon la revendication 1, intégré entre le tube-guide et un raccord d'extrémité, qui élimine l'usage dans le réacteur de tout composant de fixation séparé.

Selon cette invention, une bague de retenue flexible fait partie du manchon d'extrémité de l'ensemble du tube-guide. Cette bague de retenue est reçue dans une rainure prévue autour de la circonférence du manchon d'extrémité. Un ressort disposé dans la rainure repousse la bague vers l'extérieur. Le bord externe de la bague est reçu dans un logement cylindrique, ménagé dans un trou traversant le raccord d'extrémité et sert à retenir en position le tube-guide et le raccord. Un manchon ou une douille peut être inséré(e) dans le logement cylindrique, pour forcer la bague de retenue vers l'intérieur contre le ressort et déverrouiller le tube-guide vis-à-vis du raccord d'extrémité. Ce raccord peut être prévu de préférence à la partie supérieure du tube mais, éventuellement à sa partie inférieure.

### BREVE DESCRIPTION DES DESSINS

Pour une meilleure compréhension de la nature et des buts de la présente invention, référence est faite à la description qui suit, en relation avec les dessins annexés sur lesquels les mêmes chiffres de référence correspondent à des éléments identiques, et sur lesquels :

La figure 1 est une vue en coupe d'un tube-guide, monté dans un raccord d'extrémité supérieure selon l'invention.

La figure 2 est une vue en perspective de la bague de retenue et du ressort de l'invention.

### DESCRIPTION DETAILLEE DU MODE PREFERE DE REALISATION

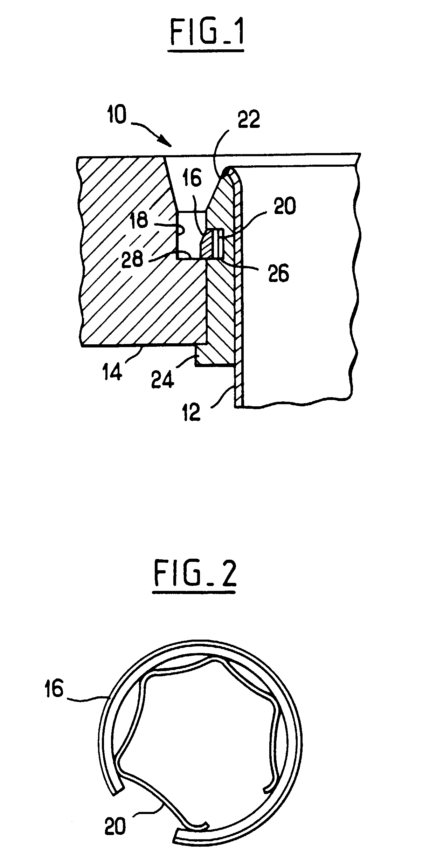

En se référant aux dessins, on observe sur la figure 1 que le dispositif de l'invention est globalement désigné par le chiffre 10. Ce dispositif de verrouillage 10 est intégré à un tube-guide 12 et à un raccord d'extrémité supérieure 14. Il est conçu pour être réutilisable, sans pouvoir perdre de pièces démontables dans le système.

Le dispositif de verrouillage 10 est généralement constitué d'une bague de retenue flexible 16, qui coopère avec un logement cylindrique 18, situé dans le raccord d'extrémité supérieure 14 pour verrouiller ensemble le tube-guide et ce raccord d'extrémité, dans leur position de montage.

Comme observé sur les figures 1 et 2, la bague de retenue 16 présente généralement une forme de C refermé. La bordure supérieure de la bague de retenue 16 est, de préférence, en forme de biseau, pour aider au déblocage du tube-guide et du raccord d'extrémité supérieure.

Le ressort 20 est reçu entre la circonférence intérieure de la bague de retenue 16 et un manchon d'extrémité supérieur 22, ce ressort repoussant la bague de retenue 16 vers l'extérieur dans le logement cylindrique 18, afin d'empêcher le raccord 14 d'être séparé du tube-guide 12.

Afin de faire fonctionner correctement la bague de retenue 16 et le ressort 20, ces éléments sont fabriqués de préférence en un matériau qui est utilisé pour les ressorts et qui convient pour une application dans un réacteur nucléaire, tel que l'alliage de nickel 718.

Puisque les tubes-guides sont usuellement relativement minces (approximativement 0,483 mm ou 19 millièmes de pouce), le manchon d'extrémité supérieure 22 est normalement solidaire du tube-guide pour foumir une zone de fixation au raccord d'extrémité supérieure et procurer le support nécessaire pour une butée à épaulement 24, afin d'empêcher ce raccord d'extrémité de se déplacer vers le bas du tube-guide, lorsque l'ensemble est dans la position verticale.

Selon l'invention, le manchon d'extrémité 22 comporte, autour de sa circonférence, une rainure 26, dimensionnée pour recevoir le ressort 20 et la bague de retenue 16. Ce ressort 20 possède, de préférence, une forme sinueuse ou ondulée, pour centrer la bague de retenue 16 sur le manchon.

Pendant le montage, le raccord d'extrémité supérieure 14 est poussé par dessus le manchon d'extrémité 22 et la bague de retenue 16. Cette bague de retenue 16 est forcée vers l'intérieur par les parois du trou lorsque le raccord d'extrémité 14 coulisse sur le tube-guide 12. Lorsque le raccord 14 est partiellement en place, une partie de la bague 16 se détend au-delà du bord de la rainure 26 sur l'épaulement 28, pour bloquer le raccord d'extrémité 14 et le tube-guide 12 dans leurs positions de montage relatives.

L'épaulement 28 peut être incliné ou biseauté vers le bas, vers le tube-guide 12. Ceci permet à la bague de retenue 16 d'être ajustée serrée dans le logement cylindrique 18 et d'éliminer toute inclinaison pour maintenir une connexion rigide.

L'enlèvement du raccord d'extrémité 14 est réalisé en exerçant une poussée à l'aide d'un manchon ou d'une douille sur la bague de retenue 16 pour la comprimer dans la rainure 26, afin de déverrouiller la connexion, en faisant glisser ensuite ce raccord 14 vers le haut jusqu'à ce que le trou principal du raccord engage la bague de retenue 16 et permette un enlèvement final.

La bordure supérieure biseautée de la bague de retenue 16 facilite l'engagement de cette bague et sa compression par le manchon ou la douille de déverrouillage utilisé(e).

## Revendications

1. Dispositif de retenue démontable pour assemblage combustible, de réacteur nucléaire, comportant un raccord d'extrémité (14) comprenant une pluralité de logements (18) à axe vertical traversant ce raccord, chacun de ces logements étant dimensionné pour recevoir au moins un manchon (22) solidarisé intérieurement d'un tube-guide (12) pour une barre de contrôle du réacteur, le manchon (22) possédant à son extrémité inférieure un épaulement (24) s'étendant radialement vers l'extérieur du logement qui le reçoit, le dispositif étant monté à l'intérieur d'une partie élargie de la partie supérieure du logement, entre le manchon et le raccord d'extrémité (14), caractérisé en ce que le logement du raccord d'extrémité présente dans sa partie élargie un épaulement (28) contre lequel porte une bague de retenue (16), cylindrique, en forme de C, montée dans une rainure (26) de même profil du manchon, s'ouvrant vers l'extérieur de celui-ci à l'opposé du tube-guide, un ressort (20) étant reçu dans cette rainure entre le fond de celle-ci et la bague de retenue, ce ressort exerçant sur la bague un effort radial provoquant son expansion en partie hors de la rainure contre l'épaulement (28) du raccord d'extrémité (14), en immobilisant simultanément le manchon par butée de son épaulement (24) contre la face inférieure du raccord.

2. Dispositif selon la revendication 1, caractérisé en ce que la bague de retenue (16) comporte deux faces d'extrémité parallèles, en appui contre les parois opposées de la rainure (26).

3. Dispositif selon l'une des revendications 1 ou 2, caractérisé en ce qu'il est monté à l'extrémité supérieure ou inférieure du tube-guide (12).

4. Dispositif selon l'une quelconque des revendications 1 à 3, caractérisé en ce que la bague de retenue (16) présente dans sa face extérieure à la rainure un chanfrein, apte à coopérer avec un outil en forme de douille, introduit dans la partie élargie du logement (18) du raccord d'extrémité (14), coaxialement au manchon pour permettre à la bague d'être ajustée serrée à l'intérieur du logement afin de maintenir une connexion rigide.

5. Dispositif selon l'une quelconque des revendications 1 à 4, caractérisé en ce que l'épaulement (28) du logement (18) du raccord d'extrémité (14) est horizontal, ou présente de préférence une forme en biseau pour aider au déblocage du manchon (22) solidaire du tube-guide (12).

6. Dispositif selon l'une quelconque des revendications 1 à 5, caractérisé en ce que la bague de retenue (16) et le ressort (20) sont réalisés en alliage de nickel 718.

## Patentansprüche

1. Abmontierbare Rückhaltevorrichtung für Brennstabbündel von Kernreaktoren, welche ein Verbindungsendstück (14) aufweisen, das eine Vielzahl von Lagern (18) aufweist, die das Verbindungsstück vertikal durchlaufen, wobei jedes dieser Lager so dimensioniert ist, daß es mindestens eine Muffe (22) aufnehmen kann, die innen mit einem Führungsrohr (12) für einen Regelungsstab fest verbunden ist, wobei die Muffe (22) an ihrem unteren Ende eine Auflage (24) besitzt, die sich radial zur Außenseite des Lagers erstreckt, das sie aufnimmt, wobei die Vorrichtung im Inneren eines verbreiterten Teils des oberen Teils des Lagers eingespannt ist zwischen der Muffe und dem Verbindungsendstück (14), dadurch gekennzeichnet, daß das Lager des Verbindungsendstücks in seinem verbreiterten Teil eine Auflage (28) aufweist, gegen die ein zylindrischer in Form eines C geformter Rückhaltering (16) drückt, der Ring, der in eine Rille (26) mit gleichem Profil wie die Muffe eingebettet ist und sich zu seiner äußeren Seite hin gegenüber dem Führungsrohr öffnet, wobei eine Feder (20) in dieser Rille zwischen ihrem Grund und dem Ring eingebettet ist, und auf den Ring eine radiale Kraft ausübt, was eine Erweiterung des Verbindungsendstücks (14) teilweise bis außerhalb der Rille bis zur Auflage (28) nach sich zieht, indem es gleichzeitig die Muffe bis zum Anschlag der Auflage (24) gegen die untere Seite festsetzt.

2. Vorrichtung nach Patentanspruch 1, dadurch gekennzeichnet, daß der Rückhaltering (16) zwei parallele äußere Seiten hat, welche gegen die gegenüberliegenden Wände der Rille (26) drücken.

3. Vorrichtung nach einem der Ansprüche 1 oder 2, dadurch gekennzeichnet, daß sie am oberen oder unteren Ende des Führungsrohrs (12) angebracht ist.

4. Vorrichtung nach einem der Ansprüche 1 bis 3, dadurch gekennzeichnet, daß der Rückhaltering (16) an seiner Außenseite der Rillen eine abgeschrägte Kante besitzt, die passend ist für ein Werkzeug in Form einer Buchse, welche in den verbreiterten Teil der Halterung (18) des Verbindungsendstücks (14) eingeführt wird parallel zur Muffe, damit es dem Ring möglich ist, passend an das Innere der Halterung angepaßt zu sein, damit eine feste Verbindung erhalten werden kann.

5. Vorrichtung nach einem der Ansprüche 1 bis 4, dadurch gekennzeichnet, daß die Auflage (28) der Lagerung (18) des Verbindungsendstücks (14) horizontal ist, oder bevorzugt eine Schräge darstellt, um beim Aufdrehen der mit dem Führungsrohr (12) fest verbundenen Muffe (22) zu helfen.

6. Vorrichtung nach einem der Ansprüche 1 bis 5, dadurch gekennzeichnet, daß der Rückhaltering (16) und die Feder (20) aus der Nickellegierung 718 gefertigt sind.

## Claims

1. Demountable retaining device for fuel assembly of nuclear reactor, possessing an end connector (14) comprising a plurality of seatings (18) with vertical axis passing through this connector, each of these seatings being so dimensioned as to receive at least one sleeve (22) firmly connected internally to a guide tube (12) for a control rod of the reactor, the sleeve (22) possessing, at its lower end, a shoulder (24) extending radially outwards from the seating which receives it, the device being mounted inside a widened-out part of the upper part of the seating, between the sleeve and the end connector (14), characterized in that the seating of the end connector possesses, in its widened-out part, a shoulder (28) against which bears a C-shaped cylindrical retaining ring (16), mounted in a groove (26) of the profile itself of the sleeve and opening outwards from the latter opposite the guide tube, a spring (20) being accommodated in this groove between the base of the groove and the retaining ring, this spring exerting on the ring a radial force causing its expansion partly out of the groove against the shoulder (28) of the end connector (14), and simultaneously immobilizing the sleeve by abutment of its shoulder (24) against the lower face of the connector.

2. Device according to claim 1, characterized in that the retaining ring (16) comprises two parallel end faces, in bearing against the opposite walls of the groove (26).

3. Device according to one of claims 1 or 2, characterized in that it is mounted at the upper or lower end of the guide tube (12).

4. Device according to any one of claims 1 to 3, characterized in that the retaining ring (16) has, in its face outside the groove, a chamfer adapted for cooperating with a tubular tool introduced into the widened-out part of the seating (18) of the end connector (14), coaxially to the sleeve, to allow the ring to be adjusted tightened inside the seating for the purpose of maintaining a rigid connection.

5. Device according to any one of claims 1 to 4, characterized in that the shoulder (28) of the seating (18) of the end connector (14) is horizontal or preferably has the form of a chamfer to assist in the releasing of the sleeve (22) integral with the guide tube (12).

6. Device according to any one of claims 1 to 5, characterized in that the retaining ring (16) and the spring (20) are made of nickel alloy 718.
